# EUROPÄISCHE PATENTSCHRIFT

(11) **EP 3 218 195 B1**
(45) Veröffentlichungstag und Bekanntmachung des Hinweises auf die Patenterteilung: **09.10.2019**
(21) Anmeldenummer: 15784052.1
(22) Anmeldetag: 22.10.2015
(51) Int. Cl.: B41J 3/407, B65G 47/90, B41F 17/00, B41F 17/18, B65B 61/26, B65C 9/02

(54) **DRUCKVORRICHTUNG SOWIE VERFAHREN ZUR BEDRUCKUNG VON BEHÄLTERN**
PRINTING DEVICE AND METHOD FOR PRINTING CONTAINERS
DISPOSITIF D'IMPRESSION ET PROCÉDÉ POUR L'IMPRESSION DE RÉCIPIENTS

(30) Priorität: 10.11.2014 DE 102014116343; 11.11.2014 DE 102014116405
(43) Veröffentlichungstag der Anmeldung: 20.09.2017
(73) Patentinhaber: KHS GmbH, 44143 Dortmund (DE)
(72) Erfinder: SCHACH, Martin, 44799 Bochum (DE); VARHANIOVSZKI, Gyula, 50259 Pulheim (DE); REINIGER, Markus, 41238 Mönchengladbach (DE)
(86) Internationale Anmeldenummer: PCT/EP2015/074439
(87) Internationale Veröffentlichungsnummer: WO 2016/074895

(56) Entgegenhaltungen:
- EP-A1- 1 260 469
- EP-A1- 1 435 296
- WO-A1-2015/036566
- GB-A- 955 715
- JP-A- S5 852 117
- US-A1- 2007 157 559

## Beschreibung

Die Erfindung bezieht sich auf eine Vorrichtung zum Bedrucken von Behältern gemäß dem Oberbegriff Patentanspruch 1 sowie auf ein Verfahren zur Bedruckung von Behältern gemäß dem Oberbegriff Patentanspruch 16.

Vorrichtungen zum Bedrucken von Behältern sind in unterschiedlichen Ausführungen bekannt. Insbesondere sind Drucksysteme zum Bedrucken von Behältern unter Verwendung von digitalen, nach dem Tintenstrahl- oder Ink-Jet-Prinzip arbeitenden elektrischen Druckköpfen bekannt. Bekannt sind dabei insbesondere auch Drucksysteme oder Druckmaschinen (z.B. DE10 2007 050 490 A1 und US2007/157559), bei denen an einem um wenigstens eine vertikale Achse umlaufend angetriebenen Transportelement mehrere Behandlungs- oder Druckstationen zur Aufnahme jeweils eines zu bedruckenden Behälters gebildet sind, an denen die Behälter unter Verwendung von elektronisch ansteuerbaren nach dem Tintenstrahl- oder Ink-Jet-Prinzip arbeitenden digitalen Druckköpfen bedruckt werden.

Ferner ist aus der Druckschrift DE 2009 058 212 A1 eine Anlage zum Bedrucken von Behältern bekannt, bei der der Behälter durch einen Roboter einem Druckkopf zugeführt wird.

Ausgehend hiervon ist es Aufgabe der Erfindung, eine Behälterbehandlungsvorrichtung anzugeben, die konstruktiv einfach gestaltet und damit kostengünstig herstellbar ist, darüber hinaus aber ein präzises Bedrucken von Behältern mit hoher Druckqualität ermöglicht.

Die Aufgabe wird ausgehend vom Oberbegriff des unabhängigen Patentanspruchs 1 durch dessen kennzeichnende Merkmale gelöst. Ein Verfahren zur Behälterbehandlung ist Gegenstand des nebengeordneten Patentanspruchs 16. Gemäß einem ersten Aspekt bezieht sich die Erfindung auf eine Vorrichtung zum Bedrucken von Behältern. Die Druckvorrichtung umfasst eine Druckstation mit zumindest einem Druckkopf, der insbesondere ein nach dem Tintenstrahlprinzip arbeitender digitaler Druckkopf ist, und eine Behältertransporteinrichtung, mittels der ein an einer Behälterladeposition befindlicher Behälter von der Behälterladeposition in eine Druckposition bewegt wird. Der Druckkopf ist zur Bedruckung des Behälters an der Druckposition ausgebildet. Die Behältertransporteinrichtung umfasst ein axial verschiebbares Hubelement und einen an diesem Hubelement angeordneten Transportarm, der um eine Schwenkachse verschwenkbar und mittels des Hubelements axial in Bezug auf diese Schwenkachse verschiebbar ist, so dass der Behälter mit einer Hub-Schwenk-Bewegung von der Behälterladeposition in die Druckposition bewegbar ist. Die erfindungsgemäße Druckvorrichtung hat den entscheidenden Vorteil, dass aufgrund einer einfachen konstruktiven Lösung für die Bewegung des zu bedruckenden Behälters von der Ladeposition in die Druckposition nicht nur eine kostengünstige Bedruckung von Behältern möglich ist sondern darüber hinaus aufgrund der geringen Anzahl von beweglichen Bauteilen eine hochpräzise Positioniergenauigkeit des Behälters gegenüber dem Druckkopf erreicht wird, was zu einer hohen Druckbildqualität führt.

Gemäß einem Ausführungsbeispiel weist der Transportarm eine Halte- und Zentriereinheit zum Halten und Zentrieren des Behälters auf. Dadurch kann der Behälter nicht nur in einer festen Position gegenüber dem Transportarm gehalten sondern auch gleichzeitig zentriert werden, so dass beispielsweise bei einer rotativen Bewegung des Behälters um dessen Behälterhochachse gegenüber dem Druckkopf die Behälterwandung stets einen definierten Abstand zu diesem Druckkopf aufweist.

Gemäß einem Ausführungsbeispiel ist die Halte- und Zentriereinheit zur hängenden Halterung des Behälters im Bereich seiner Behältermündung ausgebildet ist. Sie kann beispielsweise ein Anlagestück aufweisen, das gegenüber dem Rand der Behälteröffnung zur Anlage gelangt. Dieses Anlagestück kann beispielsweise kegelartig ausgebildet sein, um die oben beschriebene Zentrierwirkung zu erreichen. Mit diesem Anlagestück wirkt ein Spannstück der Halte- und Zentriereinheit zusammen, das den Behälter an einem seitlichen Vorsprung, beispielsweise einem Neckring erfasst und mit der Behältermündung gegen das Anlagestück drückt. Dadurch wird eine sichere, hängende Halterung des Behälters bei gleichzeitiger Zentrierung desselben erreicht, was den entscheidenden Vorteil hat, dass der Behälter abgesehen von seinem Mündungsbereich frei zugänglich und damit bedruckbar ist.

Gemäß einem Ausführungsbeispiel weist die Behältertransporteinrichtung Mittel zur Drehung des Behälters um dessen Behälterhochachse auf. Diese Mittel können beispielsweise durch einen Servomotor gebildet werden. Dadurch ist es möglich, dass der Behälter relativ dem Druckkopf um dessen Behälterhochachse gedreht wird, um die Behälterwandung umfangsseitig bedrucken zu können.

Gemäß einem Ausführungsbeispiel steht der Transportarm von dem Hubelement seitlich in einem festen Winkel ab. Insbesondere ist das Hubelement vertikal oder im Wesentlichen vertikal ausgerichtet und der Transportarm steht rechtwinklig, d.h. radial von diesem Hubelement seitlich ab. Diese winkelmäßig starre Verbindung zwischen dem Transportarm und dem Hubelement ist vorteilhaft, da dadurch geringere Positionierungenauigkeiten des Behälters gegenüber dem Druckkopf entstehen, was wiederum zu einer höheren Druckbildqualität führt.

Gemäß einem Ausführungsbeispiel ist das Hubelement stangenartig ausgebildet. Das Hubelement kann beispielsweise in einer Hülse geführt sein, so dass sich eine sichere Führung des Hubelements in axialer Richtung ergibt. Dadurch können weiterhin die Positionierungsungenauigkeiten des Behälters gegenüber dem Druckkopf verringert werden. Vorzugsweise ist das Hubelement vertikal oder im Wesentlichen vertikal ausgerichtet.

Gemäß einem Ausführungsbeispiel ist das Hubelement durch eine Hubeinrichtung in Richtung der Hubelementlängsachse verschiebbar. Die Hubeinrichtung kann beispielsweise durch einen motorischen Antrieb, insbesondere durch einen elektromagnetischen Linearantrieb, durch Einwirkung eines Servomotors auf eine Gewindespindel oder durch eine Kurvensteuerung gebildet werden. Auch andere Antriebsmittel sind denkbar. Durch diese Antriebsmittel wird insbesondere eine exakte Positioniergenauigkeit bei gleichzeitig hoher Reproduzierbarkeit der Hubbewegung erreicht.

Gemäß einem Ausführungsbeispiel ist dem Transportarm ein Schwenkantrieb zugeordnet, mittels dem der Transportarm um die Hubelementlängsachse oder eine parallel zur Hubelementlängsachse verlaufende Achse verschwenkbar ist. Der Schwenkantrieb kann insbesondere durch einen Elektromotor, beispielsweise einen Servomotor gebildet werden. Mittels dieses Schwenkantriebs wird eine automatisierte Schwenkbewegung von der Ladeposition zur Druckposition bzw. von der Druckposition zurück zur Ladeposition erreicht.

Vorzugsweise ist im Bereich der Druckstation zumindest ein Sensor vorgesehen, mittels dem eine Messgröße ableitbar ist, die vom Abstand eines zu bedruckenden Behälters zu einem Druckkopf abhängig ist. Diese Messgröße kann einer Regeleinheit zugeführt werden, die den Schwenkantrieb des Transportarms derart angesteuert, dass ein definierter Abstand zwischen der zu bedruckenden Behälterwandung und dem Druckkopf eingehalten wird. Dadurch wird erreicht, dass selbst nichtrotationssymmetrische Behälter durch die Druckvorrichtung bedruckt werden können, da die Schenkstellung des Transportarms geeignet nachgeführt wird.

Gemäß einem Ausführungsbeispiel ist die Halte- und Zentriereinheit an dem dem Hubelement beabstandeten freien Ende des Transportarms vorgesehen. Damit kann durch das Schwenken des Transportarms allein die Verlagerung des Behälters von der Ladeposition zur Druckposition bzw. von der Druckposition zur Entladeposition erfolgen.

Vorzugsweise ist das Hubelement zwischen der Druckstation mit dem zumindest einen Druckkopf und der Lade- bzw. Entladeposition angeordnet, d.h. die Druckstation und die Lade- bzw. Entladeposition befinden sich in Bezug auf das Hubelement an einander gegenüberliegenden Seiten. Dadurch kann lediglich durch Schwenken des Transportarms die Zuführung bzw. Abführung der Behälter zur Druckstation erfolgen.

Gemäß einem Ausführungsbeispiel ist eine Halteeinrichtung vorgesehen, die zur Aufnahme mehrerer Druckköpfe ausgebildet ist, wobei diese Halteeinrichtung bewegbar ist, und zwar derart, dass zum Bedrucken des Behälters schrittweise nacheinander zumindest zwei der Druckköpfe in die Druckposition bewegt werden. Unter Druckposition wird hierbei eine örtliche Anordnung des Druckkopfs relativ zur Behälterwandung derart verstanden, dass ein geringer Abstand (typischerweise im Millimeterbereich) zwischen Druckkopf und Behälterwandung erreicht wird. Dadurch können zur mehrfarbigen Bedruckung eines Behälters nacheinander die an der Halteeinrichtung angeordneten Druckköpfe in eine für die Bedruckung optimale Position gebracht werden.

Gemäß einem Ausführungsbeispiel ist die Halteeinrichtung linear verfahrbar ausgebildet. Insbesondere kann die Halteeinrichtung auf einem Lineartisch vorgesehen sein. Lineartische zeichnen sich durch eine hohe Positioniergenauigkeit bei gleichzeitig hoher Reproduzierbarkeit der Linearbewegungen aus, was wiederum vorteilhaft für die Qualität des Druckbildes ist, da eine lagegenaue Positionierung der einzelnen, durch die jeweiligen Druckköpfe erzeugten Teildruckbilder nötig ist, um ein scharfes Gesamtdruckbild zu erreichen. Alternativ kann die Halteeinrichtung auch um eine Schwenkachse verschwenkbar vorgesehen sein.

Gemäß einem Ausführungsbeispiel ist die Halteeinrichtung derart bewegbar, dass für einen Druckkopfwechsel ein erster Druckkopf aus der Druckposition heraus und ein weiterer Druckkopf in die Druckposition hinein bewegbar ist. Somit werden ein vormals aktiver Druckkopf vom Behälter wegbewegt und ein weiterer Druckkopf auf den Behälter zubewegt, so dass ein Wechsel der aktiven Druckköpfe vollzogen wird.

Vorzugsweise ist an der Halteeinrichtung eine Einrichtung zum Trocknen und/oder Abbinden der Druckfarbe bzw. der Drucktinte vorgesehen. Die Einrichtung kann beispielsweise für eine Zwischentrocknung (Pinning) eines Teildruckbildes oder aber auch für eine Endaushärtung (Curing) des Gesamtdruckbildes verwendet werden. Auch ist es möglich, dass mehrere derartige Trocknungseinrichtungen vorgesehen sind, beispielsweise zwischen den Druckköpfen, um die Bewegungen der Halteeinrichtung zu minimieren.

Gemäß einem Ausführungsbeispiel erfolgt die Bedruckung, insbesondere die mehrfarbige Bedruckung des Behälters derart, dass der Behälter an einer festen Druckposition verbleibt und die Bedruckung durch mehrere zeitlich aufeinanderfolgende Druckschritte erfolgt, wobei zwischen zwei aufeinanderfolgenden Druckschritten jeweils ein Druckkopfwechsel durch Bewegen der Halteeinrichtung vollzogen wird. Durch die ausschließliche Bewegung des Druckkopfs relativ zum Behälter wird die Druckqualität weiterhin gesteigert, da durch das Feststehen des Behälters mögliche durch die Bewegung entstehende Ungenauigkeiten vermieden werden.

Gemäß einem Ausführungsbeispiel sind zumindest zwei Behältertransportvorrichtungen vorgesehen, die in zeitlich versetzten Zyklen abwechselnd nacheinander eine Zuführung von Behältern von der Behälterladeposition zur Druckposition bewirken. Dadurch wird eine höhere Verarbeitungsgeschwindigkeit (Anzahl bedruckter Behälter pro Zeiteinheit) erreicht.

Gemäß einem Ausführungsbeispiel sind die zumindest zwei Behältertransportvorrichtungen derart ausgebildet und angesteuert, dass ein erster Behälter durch eine erste Behältertransportvorrichtung an der Druckposition gehalten wird, während ein zweiter Behälter durch eine zweite Behältertransportvorrichtung an der Behälterladeposition aufgenommen und/oder an einer Entladeposition abgestellt wird. Damit wird die Zeit, in der eine Bedruckung des ersten Behälters erfolgt, für die Zuführung bzw. Abführung des zweiten Behälters genutzt. Die zumindest zwei Behältertransportvorrichtungen können dabei derart ausgebildet sein, dass eine kollisionsfreie Bewegung der ersten Behältertransportvorrichtung mit daran vorgesehenem Behälter an der zweiten Behältertransporteinrichtung vorbei erfolgen kann. Dies kann beispielsweise durch ein Verfahren der Behältertransportvorrichtungen in vertikaler Richtung oder in radialer Richtung (radial in Bezug auf die jeweilige Schwenkachse der Behältertransportvorrichtung) bewirkt werden. Auch andere Maßnahmen zur kollisionsfreien Bewegung der Behältertransporteinrichtungen relativ zueinander sind denkbar.

Gemäß einem weiteren Aspekt bezieht sich die Erfindung auf ein Verfahren zum Bedrucken von Behältern mittels eines Druckkopfs, wobei ein an einer Behälterladeposition befindlicher Behälter mittels eines Transportarms einer Behältertransporteinrichtung von der Behälterladeposition in eine Druckposition bewegt und an dieser Druckposition bedruckt wird, wobei der Behälter mittels einer Hub-Schwenk-Bewegung von der Behälterladeposition in die Druckposition bewegt wird, und zwar derart, dass der Transportarm der Behältertransporteinrichtung um eine Schwenkachse verschwenkt und mittels eines axial verschiebbaren Hubelements axial in Bezug auf diese Schwenkachse verschoben wird.

Unter Behälter im Sinne der Erfindung werden sämtliche Behälter verstanden, insbesondere Flaschen, Dosen etc.

Der Ausdruck "im Wesentlichen" bzw. "etwa" bedeutet im Sinne der Erfindung Abweichungen vom jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an Ausführungsbeispielen näher erläutert. Es zeigen:
- Fig. 1: beispielhaft eine Druckvorrichtung in einer perspektivischen Darstellung; und
- Fig. 2: beispielhaft eine Druckvorrichtung in einer Seitenansicht.

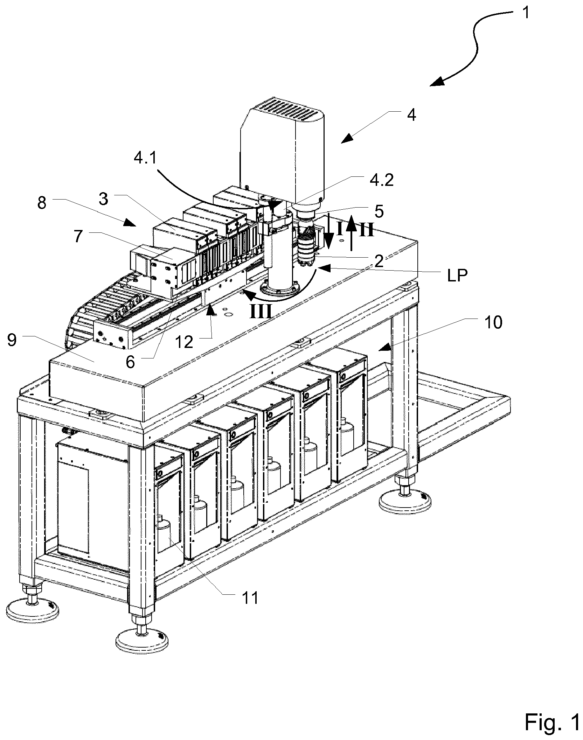

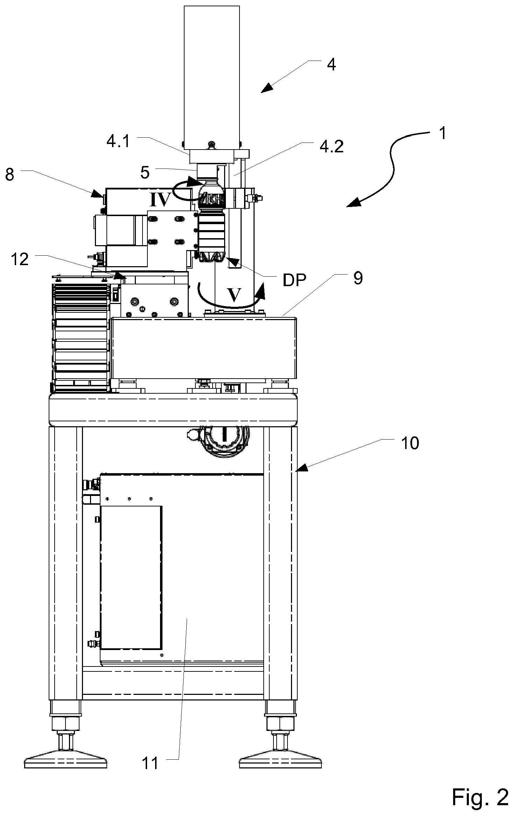

In den Figuren 1 und 2 ist mit dem Bezugszeichen 1 jeweils eine Vorrichtung zum Bedrucken von Behältern 2 bezeichnet. Die Vorrichtung 1 weist eine Druckstation, insbesondere eine einzige Druckstation auf, an der mittels eines digitalen Direktdruckverfahrens eine unmittelbare Bedruckung der Behälterwandlung des Behälters 2 erfolgt. Die Druckvorrichtung 1 dient dabei insbesondere zur Fertigung von Kleinserien oder zur Fertigung von Musterbehältern.

Die in dem Ausführungsbeispiel gezeigte Druckvorrichtung 1 ist auf einem Gestell angeordnet. Sie weist eine Behältertransporteinrichtung 4 auf, mittels der ein Behälter 2 in geeigneter Weise an einer Behälterladeposition LP aufgenommen und einer Druckposition DP zugeführt werden kann. An dieser Druckposition DP ist zumindest eine Druckstation 8 mit zumindest einem Druckkopf 3, im gezeigten Ausführungsbeispiel mit einer Vielzahl von Druckköpfen 3, vorgesehen, mittels denen die Behälterwandung außenseitig bedruckt wird. Die Druckköpfe 3 sind dabei insbesondere digitale Druckköpfe, die eine Ausbringung von Druckfarbe bzw. Drucktinte nach dem Tintenstrahlprinzip ermöglichen.

Die Behältertransporteinrichtung 4 besteht im gezeigten Ausführungsbeispiel aus einem Transportarm 4.1 und einem Hubelement 4.2. Das Hubelement 4.2 kann insbesondere stangenartig oder zumindest abschnittsweise stangenartig ausgebildet sein. Beispielsweise kann sich das Hubelement 4.2 in vertikaler Richtung oder im Wesentlichen in vertikaler Richtung erstrecken, d.h. das Hubelement 4.2 steht oberseitig von einer Montagefläche 9 der Druckvorrichtung 1 ab. Das Hubelement 4.2 ist verschiebbar ausgebildet, und zwar verschiebbar entlang der Längsachse des Hubelements 4.2. Somit kann der Abstand eines von der Montagefläche 9 abgewandten freien Endes des Hubelements relativ zu dieser Montagefläche 9 verändert werden. Die Verschiebung des Hubelements 4.2 kann automatisiert durch einen geeigneten Antrieb erfolgen, beispielsweise hydraulisch, pneumatisch, durch eine Kurvensteuerung oder durch einen elektromagnetischen Linearantrieb.

An dem von der Montagefläche 9 abstehenden freien Ende des Hubelements 4.2 ist der Transportarm 4.1 vorgesehen, der winklig von dem Hubelement 4.2 absteht. Insbesondere kann zwischen dem Hubelement 4.2 und dem Transportarm 4.1 eine starre Winkelverbindung bestehen, d.h. der Transportarm 4.1 steht in einem festen Winkel vom Hubelement 4.2 seitlich ab. Der Transportarm 4.1 kann insbesondere in einem rechten Winkel vom Hubelement 4.2 abstehen.

Um ein Verschwenken des Transportarms 4.1 zu ermöglichen, ist ein Schwenkantrieb vorgesehen, mittels dem der Transportarm 4.1 um eine Schwenkachse, insbesondere eine vertikale Schwenkachse verschwenkt werden kann. Diese Schwenkachse ist insbesondere die Längsachse des Hubelements 4.2 oder eine dazu parallele Schwenkachse. Bei horizontaler oder im Wesentlichen horizontaler Ausrichtung des Transportarms 4.1 kann damit dieser Transportarm 4.1 in einer horizontalen bzw. im Wesentlichen horizontalen Ebene verschwenkt werden.

An dem dem Hubelement 4.2 abgewandten freien Ende des Transportarms 4.1 ist eine Halte- und Zentriereinheit 5 vorgesehen, mittels der ein zu bedruckender Behälter 2 im Bereich seiner Behältermündung aufgenommen und gehalten werden kann. Die Halte- und Zentriereinheit 5 ist insbesondere zur hängenden Halterung des Behälters 2 ausgebildet. Sie weist beispielsweise ein Anlagestück auf, das gegenüber dem im Bereich der Behältermündung befindlichen Rand der Behälteröffnung zur Anlage gebracht wird. Das Anlagestück kann dabei insbesondere als Zentrierstück oder Zentrierkegel ausgebildet sein. Des Weiteren weist die Halte- und Zentriereinheit 5 ein Spannstück auf, das zum zumindest teilweisen Umgreifen eines an dem Behälter 2 ausgebildeten Neckrings ausgebildet ist. Die Aufnahme und Halterung des Behälters an der Halte- und Zentriereinheit 5 erfolgt durch Relativbewegung des Spannstücks gegenüber dem Anlagestück, wobei der Behälter 2 mit seinem im Bereich der Behälteröffnung vorgesehenen Rand durch das Spannstück gegen das Anlagestück gepresst wird.

Die Halte- und Zentriereinheit 5 ist vorzugsweise mit einem Antrieb gekoppelt, mittels dem ein an der Halte- und Zentriereinheit 5 aufgenommener Behälter 2 um dessen Behälterhochachse rotativ antreibbar ist. Der Antrieb ist vorzugsweise ein Servomotor, der das Anlagestück und das Spannstück rotativ antreibt, so dass ein an der Halte- und Zentriereinheit 5 aufgenommener Behälter 2 um eine vertikaler oder im wesentlichen vertikale Drehachse gedreht wird. Diese Drehachse ist vorzugsweise parallel der Längsachse des Hubelements 4.2.

Um eine Bewegung der Behältertransporteinrichtung 4 von der Ladeposition LP in die Druckposition DP zu ermöglichen, führt die Behältertransporteinrichtung 4 eine Hub-Schwenkbewegung aus. An der Behälterladeposition LP kann eine Behälterzuführung mittels einer Behälterfördereinrichtung, beispielsweise einem Linearförderer, Transportstern o.ä. erfolgen. Alternativ kann die Behälterzuführung zu der Behälterladeposition LP auch manuell erfolgen. Zunächst erfolgt die Aufnahme eines zu bedruckenden Behälters 2 an der Ladeposition LP durch Absenken der Halte- und Zentriereinheit 5 auf die Behältermündung und der zuvor beschriebenen Fixierung des Behälters 2 im Bereich seiner Behältermündung durch die Halte- und Zentriereinheit 5 (Pfeil I). Das Absenken der Halte- und Zentriereinheit 5 auf die Behältermündung erfolgt durch Verschiebung des Hubelements 4.2 entlang seiner Hubelementlängsachse.

Anschließend wird das Hubelement 4.2 in entgegengesetzter Richtung verschoben und damit der an der Halte- und Zentriereinheit 5 fixierte Behälter 2 angehoben (Pfeil II). Im weiteren erfolgt ein Verschwenken des Transportarms 4.1 um die Hubelementlängsachse, so dass der zu bedruckende Behälter 2 von der Ladeposition LP in die Druckposition DP bewegt wird (Pfeil III). An dieser Druckposition DP erfolgt anschließend die Bedruckung des Behälters 2. Dabei wird der Behälter 2 um dessen Behälterhochachse gedreht (Pfeil IV) und dabei durch einen an dem Behälter 2 positionierten Druckkopf 3 bedruckt. Vorzugsweise verbleibt der Behälter 2 an einer festen Raumposition, d.h. die Behältertransporteinrichtung 4 vollzieht während der Bedruckung keine Schwenkbewegung um die Hochachse des Hubelements 4.2. Dies gilt insbesondere für rotationssymmetrische Behälter.

Für den Fall, dass ein nicht rotationssymmetrischer Behälter 2 zu bedrucken ist, kann zusätzlich zu der rotativen Bewegung des Behälters 2 um dessen Behälterhochachse eine Verschwenkung des Transportarms 4.1 um die Längsachse des Hubelements 4.2 oder eine dazu parallele Achse erfolgen. Dadurch kann der Abstand der Behälterwandung zu dem die Bedruckung bewirkenden Druckkopf abhängig von der Drehposition des Behälters bzw. von der Behälterform verändert werden, so dass unabhängig von der Behälterform ein gewünschter Abstand zwischen dem die Bedruckung bewirkenden Druckkopf 3 und dem diesem Druckkopf 3 gegenüberliegenden Behälterwandungsabschnitt erreicht wird.

Zur Steuerung der Schwenkbewegung des Transportarms 4.1 in Abhängigkeit vom Abstand des die Bedruckung bewirkenden Druckkopfs 3 zur Behälterwandung kann ein Mess- und Regelsystem vorgesehen sein. Dieses Mess- und Regelsystem umfasst insbesondere eine Sensorik, mittels der der Abstand des aktuell die Bedruckung bewirkenden Druckkopfs 3 zur Behälterwandung bestimmt wird. In Abhängigkeit dieser Messgröße wird der die Schwenkbewegung des Transportarms 4.1 bewirkende Antrieb derart angesteuert, so dass der Abstand der Behälterwandung zu dem jeweils aktiven Druckkopf 3 konstant oder näherungsweise konstant gehalten wird.

Um eine mehrfarbige Bedruckung eines Behälters 2 zu ermöglichen, sind an der Druckstation 8 eine Vielzahl von Druckköpfe 3 vorgesehen. Diese Druckköpfe 3 sind an einer Halteeinrichtung 6 vorgesehen. Dabei sind sämtliche Druckköpfe 3 zueinander parallel ausgerichtet, d.h. die Abgaberichtungen, mit der eine Abgabe von Druckfarbe bzw. -tinte an die Behälter erfolgt, aller Druckköpfe ist gleich.

Bei der Direktbedruckung von Behältern 2 ist wichtig, dass ein aktiver Druckkopf, d.h. ein Druckkopf, der aktuell die Bedruckung des Behälters 2 durchführt, eine Position gegenüber dem Behälter 2 einnimmt, in der dieser Druckkopf mit geringem Abstand (beispielsweise 1 bis 3mm) gegenüber der Behälterwandung zu liegen kommt. Diese Position wird nachfolgend Drucklage genannt. Um zu erreichen, dass ein an der Druckposition DP befindlicher Behälter 3 nacheinander durch mehrere oder sämtliche an der Druckstation 8 vorgesehene Druckköpfe bedruckt wird, ist es notwendig, dass nach dem Bedrucken ein Druckkopf 3 aus der Drucklage herausbewegt und ein weiterer Druckkopf 3 in diese Drucklage bewegt wird. Diese Bewegung wird nachfolgend Druckkopfwechsel bezeichnet.

Um einen Druckkopfwechsel zu ermöglichen, ist die die Druckköpfe 3 tragende Halteeinrichtung 6 beweglich ausgebildet. Die Bewegung der Halteeinrichtung 6 kann durch eine lineare Bewegung oder durch eine Schwenkbewegung erfolgen. Im gezeigten Ausführungsbeispiel ist die Halteeinrichtung 6 auf einem Lineartisch 12 angeordnet, mittels dem die Halteeinrichtung 6 geradlinig verfahrbar ist. Der Lineartisch 12 kann insbesondere ein hochauflösender Lineartisch sein, der eine reproduzierbare Reproduziergenauigkeit im Bereich von 0,01mm besitzt. Dadurch wird gewährleistet, dass die übereinander anzuordnenden Druckbilder unterschiedlicher Farben möglichst lagegenau übereinander zu liegen kommen und sich damit eine hohe Druckqualität ergibt.

An der Halteeinrichtung 6 können zudem weitere Funktionselemente angeordnet sein, beispielsweise eine Einrichtung 7 zum Trocknen oder Abbinden der Druckfarbe bzw. Drucktinte. Diese Einrichtung kann beispielsweise durch eine UV-Lampe gebildet werden. Die Versorgung der Druckköpfe 3 bzw. der weiteren Funktionselemente mit Betriebsmitteln, beispielsweise Druckfarbe bzw. Drucktinte erfolgt an der der Druckposition DP abgewandten Rückseite der Halteeinrichtung 6 mittels flexibler Versorgungsleitungen. Beispielsweise kann in einem unterhalb der Druckstation 8 befindlichen Bereich ein Versorgungsraum 10 vorgesehen sein, der zur Aufnahme von diese Betriebsmittel beinhaltenden Vorratsbehältern 11 dient.

Die Bedruckung eines an der Halte- und Fixiereinheit 5 gehaltenen, an der Druckposition DP angeordneten Behälters 2 erfolgt beispielsweise dadurch, dass nach dem Positionieren eines Druckkopf 3 in der Drucklage der Behälter 2 relativ zu dem Druckkopf bewegt wird, insbesondere um dessen Behälterhochachse gedreht wird. Anschließend erfolgt ein Druckkopfwechsel, wobei der zunächst aktive Druckkopf 3 aus der Drucklage heraus bewegt und ein weiterer Druckkopf 3 in die Drucklage bewegt wird. Anschließend erfolgt erneut eine Relativbewegung des Behälters 2 zu dem Druckkopf 3 und dabei eine erneute Bedruckung des Behälters mit einer weiteren Druckfarbe, so dass durch die aufeinanderfolgende Aufbringung von Druckbildern in unterschiedlichen Druckfarben ein farbiges Gesamtdruckbild entsteht. Zwischen den einzelnen Druckschriften kann eine Zwischentrocknung (sog. Pinning) der Druckfarbe bzw. Drucktinte erfolgen. Hierzu kann den jeweiligen Druckköpfen 3 eine geeignete Trocknungseinrichtung zugeordnet sein, die beispielsweise zwischen zwei aufeinanderfolgenden Druckköpfen vorgesehen ist. Nachdem sämtliche Druckbilder aufgebracht sind, kann eine Endaushärtung der Druckfarbe bzw. Drucktinte (sog. Curing) erfolgen. Hierzu kann beispielsweise an einem Ende der Halteeinrichtung 6 eine dafür geeignete Trocknungseinrichtung 7 vorgesehen sein, die nach Abschluss der Aufbringung der Druckbilder gegenüber dem Behälter 2 platziert wird, so dass die Endaushärtung des Gesamtdruckbilds erfolgen kann.

Nachdem Abschluss des Druckvorgangs wird der bedruckte Behälter 2 durch eine Schwenkbewegung des Transportarms 4.1 ein eine Entladeposition bewegt (Pfeil V) und durch Absenken des Hubelements 4.2 und Freigeben des Behälters 2 durch die Halte- und Zentriereinheit 5 in dieser Entladeposition abgesetzt. Die Entladeposition kann dabei der Ladeposition LP entsprechen. Alternativ können die Ladeposition LP und die Entladeposition an unterschiedlichen Orten vorgesehen sein. Der Abtransport der bedruckten Behälter kann manuell oder durch eine geeignete Fördereinrichtung erfolgen.

In einer Ausführungsform der Erfindung sind zumindest zwei Behältertransporteinrichtungen 4 vorgesehen. Diese Behältertransporteinrichtungen 4 sind derart ausgebildet, dass durch diese in zeitlich versetzten Zyklen abwechselnd nacheinander eine Zuführung von Behältern 2 von der Behälterladeposition LP zur Druckposition DP bzw. zurück zur Entladeposition erfolgt. Dadurch kann der Zeitraum, in dem ein von einer ersten Behältertransporteinrichtung 4 gehaltener Behälter 2 an der Druckstation 8 bedruckt wird, für die Abführung eines bereits bedruckten Behälters 2 zur Entladeposition bzw. zur Aufnahme eines neuen, zu bedruckenden Behälters 2 an der Behälterladeposition LP genutzt werden.

Um eine kollisionsfreie Bewegung der Behältertransporteinrichtungen 4 einschließlich der daran gehaltenen Behälter realisieren zu können, sind die Behältertransporteinrichtungen 4 bzw. die jeweils daran vorgesehene Halte- und Zentriereinheit 5 derart relativ zueinander bewegbar, so dass eine kollisionsfreie Relativbewegung der Behältertransporteinrichtungen 4 möglich ist. Beispielsweise kann die Relativbewegung durch einen vertikalen Versatz der Transportarme 4.1 bewirkt werden oder aber durch eine radiale Relativbewegung der an den Transportarmen 4.1 vorgesehenen Halte- und Zentriereinheiten 5. Auch andere Maßnahmen zur kollisionsfreien Relativbewegung der Behältertransporteinrichtungen 4 sind denkbar.

Die Erfindung wurde voranstehend an Ausführungsbeispielen beschrieben. Es versteht sich, dass eine Vielzahl von Änderungen oder Abwandlungen möglich sind, ohne dass dadurch der der Erfindung zugrundeliegende Erfindungsgedanke verlassen wird.

### Bezugszeichenliste

- 1: Druckvorrichtung
- 2: Behälter
- 3: Druckkopf
- 4: Behältertransporteinrichtung
- 4.1: Transportarm
- 4.2: Hubelement
- 5: Halte- und Zentriereinheit
- 6: Halteeinrichtung
- 7: Trockungs-/ Abbindeeinrichtung
- 8: Druckstation
- 9: Montagefläche
- 10: Versorgungsraum
- 11: Vorratsbehälter
- 12: Lineartisch

- DP: Druckposition
- LP: Behälterladeposition

## Patentansprüche

1. Vorrichtung zum Bedrucken von Behältern (2) umfassend zumindest einen Druckkopf (3) und eine Behältertransporteinrichtung (4), mittels der ein an einer Behälterladeposition (LP) befindlicher Behälter (2) von der Behälterladeposition (LP) in eine Druckposition (DP) bewegt wird, wobei der Druckkopf (3) zur Bedruckung des Behälters (2) an der Druckposition (DP) ausgebildet ist, und **dadurch gekennzeichnet dass** die Behältertransporteinrichtung (4) ein axial verschiebbares Hubelement (4.2) und einen an diesem Hubelement (4.2) angeordneten Transportarm (4.1) umfasst, der um eine Schwenkachse verschwenkbar und mittels des Hubelements (4.2) axial in Bezug auf diese Schwenkachse verschiebbar ist, so dass der Behälter (2) mit einer Hub-Schwenk-Bewegung von der Behälterladeposition (LP) in die Druckposition (DP) bewegbar ist, wobei der Transportarm (4.1) eine Halte- und Zentriereinheit (5) zum Halten und Zentrieren des Behälters (2) aufweist.

2. Vorrichtung nach Anspruch 1, **dadurch gekennzeichnet, dass** die Halte- und Zentriereinheit (5) zur hängenden Halterung des Behälters (2) im Bereich seiner Behältermündung ausgebildet ist.

3. Vorrichtung nach einem der vorhergehenden Ansprüche, **dadurch gekennzeichnet, dass** die Behältertransporteinrichtung (4) Mittel zur Drehung des Behälters (2) um dessen Behälterhochachse aufweist.

4. Vorrichtung nach einem der vorhergehenden Ansprüche, **dadurch gekennzeichnet, dass** der Transportarm (4.1) von dem Hubelement (4.2) seitlich in einem festen Winkel absteht.

5. Vorrichtung nach Anspruch 4, **dadurch gekennzeichnet, dass** das Hubelement (4.2) stangenartig ausgebildet ist und/oder vertikal oder im Wesentlichen vertikal ausgerichtet ist.

6. Vorrichtung nach Anspruch 4 oder 5, **dadurch gekennzeichnet, dass** das Hubelement (4.2) durch eine Hubeinrichtung in Richtung der Hubelementlängsachse verschiebbar ist.

7. Vorrichtung nach einem der Ansprüche 4 bis 6, **dadurch gekennzeichnet, dass** dem Transportarm (4.1) ein Schwenkantrieb zugeordnet ist, mittels dem der Transportarm (4.1) um die Hubelementlängsachse oder eine parallel zur Hubelementlängsachse verlaufende Achse verschwenkbar ist.

8. Vorrichtung nach einem der vorhergehenden Ansprüche 4 bis 7, **dadurch gekennzeichnet, dass** die Halte- und Zentriereinheit (5) an dem dem Hubelement (4.2) beabstandeten freien Ende des Transportarms (4.1) vorgesehen ist.

9. Vorrichtung nach einem der vorhergehenden Ansprüche, **dadurch gekennzeichnet, dass** eine Halteeinrichtung (6) vorgesehen ist, die zur Aufnahme mehrerer Druckköpfe (3) ausgebildet ist und dass diese Halteeinrichtung (6) bewegbar ist, und zwar derart, dass zum Bedrucken des Behälters (2) schrittweise nacheinander zumindest zwei der Druckköpfe (3) in die Druckposition (DP) bewegt werden.

10. Vorrichtung nach Anspruch 9, **dadurch gekennzeichnet, dass** die Halteeinrichtung (6) linear verfahrbar ausgebildet ist.

11. Vorrichtung nach Anspruch 9 oder 10, **dadurch gekennzeichnet, dass** die Halteeinrichtung (6) derart bewegbar ist, dass für einen Druckkopfwechsel ein erster Druckkopf (3) aus der Druckposition (DP) heraus und ein weiterer Druckkopf (3) in die Druckposition (DP) hinein bewegbar ist.

12. Vorrichtung nach einem der Ansprüche 9 bis 11, **dadurch gekennzeichnet, dass** an der Halteeinrichtung (6) eine Einrichtung (7) zum Trocknen und/oder Abbinden der Druckfarbe bzw. der Drucktinte vorgesehen ist.

13. Vorrichtung nach einem der vorhergehenden Ansprüche, **gekennzeichnet durch** eine Ausbildung derart, dass die Bedruckung, insbesondere eine mehrfarbige Bedruckung des Behälters (2) derart erfolgt, dass der Behälter (2) an einer festen Druckposition (DP) verbleibt und die Bedruckung durch mehrere zeitlich aufeinanderfolgende Druckschritte erfolgt, wobei zwischen zwei aufeinanderfolgenden Druckschritten jeweils ein Druckkopfwechsel durch Bewegen der Halteeinrichtung (6) vollzogen wird.

14. Vorrichtung nach einem der vorhergehenden Ansprüche, **dadurch gekennzeichnet, dass** zumindest zwei Behältertransportvorrichtungen (4) vorgesehen sind, die in zeitlich versetzten Zyklen abwechselnd nacheinander eine Zuführung von Behältern (2) von der Behälterladeposition (LP) zur Druckposition (DP) bewirken.

15. Vorrichtung nach Anspruch 14, **dadurch gekennzeichnet, dass** die zumindest zwei Behältertransportvorrichtungen (4) derart ausgebildet und ansteuerbar sind, dass ein erster Behälter (2) durch eine erste Behältertransportvorrichtung (4) an der Druckposition (DP) gehalten werden kann, während ein zweiter Behälter (2) durch eine zweite Behältertransportvorrichtung (4) an der Behälterladeposition (LP) aufgenommen und/oder an einer Entladeposition abgestellt werden kann.

16. Verfahren zum Bedrucken von Behältern (2) mittels eines Druckkopfs (3), wobei ein an einer Behälterladeposition (LP) befindlicher Behälter (2) mittels eines Transportarms (4.1) einer Behältertransporteinrichtung (4) von der Behälterladeposition (LP) in eine Druckposition (DP) bewegt und an dieser Druckposition bedruckt wird, **dadurch gekennzeichnet dass** der Behälter (2) mittels einer Halte- und Zentriereinheit (5) des Transportarms (4.1) gehalten und zentrieren wird und mittels einer Hub-Schwenk-Bewegung von der Behälterladeposition (LP) in die Druckposition (DP) bewegt wird und zwar derart, dass der Transportarm (4.1) der Behältertransporteinrichtung (4) um eine Schwenkachse verschwenkt und mittels eines axial verschiebbaren Hubelements (4.2) axial in Bezug auf diese Schwenkachse verschoben wird.

## Claims

1. Device for printing containers (2), comprising at least one print head (3) and a container transport device (4), by means of which a container (2), located at a container loading position (LP), is moved from the container loading position (LP) into a printing position (DP), wherein the printing head (3) is configured for the printing of the container (2) at the printing position (DP), and **characterised in that** the container transport device (4) comprises an axially movable lifting element (4.2) and a transport arm (4.1) arranged at this lifting element (4.2), which can be pivoted about a pivot axis and by means of which the lifting element (4.2) can be moved axially in relation to this pivot axis, such that the container (2) can be moved with a lifting-pivoting movement from the container loading position (LP) into the printing position (DP), wherein the transport arm (4.1) comprises a holding and centring unit (5) for holding and centring the container (2).

2. Device according to claim 1, **characterised in that** the holding and centring unit (5) is configured for the suspended holding of the container (2) in the region of its container mouth.

3. Device according to any one of the preceding claims, **characterised in that** the container transport device (4) comprises means for the rotation of the container (2) about its container vertical axis.

4. Device according to any one of the preceding claims, **characterised in that** the transport arm (4.1) projects laterally from the lifting element (4.2) at a fixed angle.

5. Device according to claim 4, **characterised in that** the lifting element (4.2) is configured in the form of a rod and/or is aligned vertically or essentially vertically.

6. Device according to claims 4 or 5, **characterised in that** the lifting element (4.2) can be moved by a lifting device in the direction of the lifting element longitudinal axis.

7. Device according to any one of claims 4 to 6, **characterised in that** a pivot drive unit is assigned to the transport arm (4.1), by means of which the transport arm (4.1) can be pivoted about the lifting element longitudinal axis or an axis running parallel to the lifting element longitudinal axis.

8. Device according to any one of the preceding claims 4 to 7, **characterised in that** the holding and centring unit (5) is provided at the free end of the transport arm (4.1) spaced at a distance from the lifting element (4.2).

9. Device according to any one of the preceding claims, **characterised in that** a holding device (6) is provided, which is configured to receive several print heads (3), and that this holding device (6) is movable, and specifically in such a way that, for the printing of the container (2), in a stepped manner and one after another, at least two of the print heads (3) are moved into the printing position (DP).

10. Device according to claim 9, **characterised in that** the holding device (6) is configured so as to be movable linearly.

11. Device according to claim 9 or 10, **characterised in that** the holding device (6) is movable in such a way that, for a print head change, a first print head (3) can be moved out of the printing position (DP) and a further print head (3) can be moved into the printing position (DP).

12. Device according to any one of the preceding claims 9 to 11, **characterised in that** a device (7) is provided at the holding device (6) for drying and/or setting of the printing ink.

13. Device according to any one of the preceding claims, **characterised by** a configuration such that the printing, in particular a multi-coloured printing, of the container (2) takes place in the manner that the container (2) remains in a fixed printing position (DP), and the printing takes place by way of several printing steps in a temporal sequence, wherein, between two sequential printing steps, in each case a print head change is carried out by moving the holding device (6).

14. Device according to any one of the preceding claims, **characterised in that** at least two container transport devices (4) are provided, which take effect in temporally offset cycles, alternating one after another, causing a delivery of containers (2) from a container loading position (LP) to the printing position (DP).

15. Device according to claim 14, **characterised in that** the at least two container transport devices (4) are configured and controllable in such a way that a first container (2) can be held by a first container transport device (4) at the printing position (DP), while a second container (2) can be taken up by a second container transport device (4) at the container loading position (LP) and/or set down at an unloading position.

16. Method for printing containers (2) by means of a print head (3), wherein a container (2) located at a container loading position (LP) is moved by means of a transport arm (4.1) of a container transport device (4) from the container loading position (LP) into a printing position (DP) and is printed at this printing position, **characterised in that** the container (2) is held and centred by means of a holding and centring unit (5) of the transport arm (4.1), and moved by means of a lifting-pivoting movement from the container loading position (LP) into the printing position (DP), and specifically in such a way that the transport arm (4.1) of the container transport device (4) is pivoted about a pivot axis and moved axially in relation to this pivot axis by means of an axially movable lifting element (4.2).

## Revendications

1. Dispositif d'impression de récipients (2) comprenant au moins une tête d'impression (3) et un dispositif de transport de récipient (4), au moyen duquel un récipient (2) se trouvant à une position de chargement de récipient (LP) est déplacé de la position de chargement de récipient (LP) à une position d'impression (DP), dans lequel la tête d'impression (3) est réalisée pour l'impression du récipient (2) au niveau de la position d'impression (DP), et **caractérisé en ce que** le dispositif de transport de récipient (4) comprend un élément de levage (4.2) déplaçable axialement et un bras de transport (4.1) agencé au niveau de cet élément de levage (4.2), qui est pivotant autour d'un axe de pivotement et déplaçable axialement par rapport à cet axe de pivotement au moyen de l'élément de levage (4.2), de sorte que le récipient (2) soit déplaçable avec un mouvement de levage-pivotement de la position de chargement de récipient (LP) à la position d'impression (DP), dans lequel le bras de transport (4.1) présente une unité de maintien et de centrage (5) pour le maintien et le centrage du récipient (2).

2. Dispositif selon la revendication 1, **caractérisé en ce que** l'unité de maintien et de centrage (5) est réalisée pour le maintien suspendu du récipient (2) dans la zone de son embouchure de récipient.

3. Dispositif selon l'une quelconque des revendications précédentes, **caractérisé en ce que** le dispositif de transport de récipient (4) présente des moyens de rotation du récipient (2) autour de son axe vertical de récipient.

4. Dispositif selon l'une quelconque des revendications précédentes, **caractérisé en ce que** le bras de transport (4.1) fait saillie de l'élément de levage (4.2) latéralement selon un angle fixe.

5. Dispositif selon la revendication 4, **caractérisé en ce que** l'élément de levage (4.2) est réalisé en forme de barre et/ou est orienté verticalement ou sensiblement verticalement.

6. Dispositif selon la revendication 4 ou 5, **caractérisé en ce que** l'élément de levage (4.2) est déplaçable par un dispositif de levage en direction de l'axe longitudinal d'élément de levage.

7. Dispositif selon l'une quelconque des revendications 4 à 6, **caractérisé en ce qu'**un entraînement de pivotement, au moyen duquel le bras de transport (4.1) est pivotant autour de l'axe longitudinal d'élément de levage ou d'un axe s'étendant parallèlement à l'axe longitudinal d'élément de levage, est associé au bras de transport (4.1).

8. Dispositif selon l'une quelconque des revendications 4 à 7, **caractérisé en ce que** l'unité de maintien et de centrage (5) est prévue au niveau de l'extrémité libre espacée de l'élément de levage (4.2) du bras de transport (4.1).

9. Dispositif selon l'une quelconque des revendications précédentes, **caractérisé en ce qu'**un dispositif de maintien (6) est prévu, qui est réalisé pour la réception de plusieurs têtes d'impression (3) et que ce dispositif de maintien (6) est déplaçable, et ce de sorte que, pour l'impression du récipient (2), au moins deux des têtes d'impression (3) soient déplacées pas à pas l'une après l'autre dans la position d'impression (DP).

10. Dispositif selon la revendication 9, **caractérisé en ce que** le dispositif de maintien (6) est réalisé linéairement mobile.

11. Dispositif selon la revendication 9 ou 10, **caractérisé en ce que** le dispositif de maintien (6) est déplaçable de sorte que, pour un changement de tête d'impression, une première tête d'impression (3) puisse être déplacée hors de la position d'impression (DP) et une autre tête d'impression (3) dans la position d'impression (DP).

12. Dispositif selon l'une quelconque des revendications 9 à 11, **caractérisé en ce qu'**un dispositif (7) pour le séchage et/ou la prise de la couleur d'impression ou de l'encre d'impression est prévu au niveau du dispositif de maintien (6).

13. Dispositif selon l'une quelconque des revendications précédentes, **caractérisé par** un mode de réalisation de sorte que l'impression, en particulier une impression multicolore, du récipient (2) ait lieu de sorte que le récipient (2) reste au niveau d'une position d'impression fixe (DP) et l'impression se fasse par plusieurs étapes d'impression successives dans le temps, dans lequel respectivement un changement de tête d'impression est réalisé par déplacement du dispositif de maintien (6) entre deux étapes d'impression successives.

14. Dispositif selon l'une quelconque des revendications précédentes, **caractérisé en ce qu'**au moins deux dispositifs de transport de récipient (4) sont prévus, qui entraînent dans des cycles décalés dans le temps tour à tour l'un après l'autre une amenée de récipients (2) de la position de chargement de récipient (LP) à la position d'impression (DP).

15. Dispositif selon la revendication 14, **caractérisé en ce que** les au moins deux dispositifs de transport de récipient (4) sont réalisés et peuvent être commandés de sorte qu'un premier récipient (2) puisse être maintenu par un premier dispositif de transport de récipient (4) à la position d'impression (DP), pendant qu'un deuxième récipient (2) peut être reçu par un deuxième dispositif de transport de récipient (4) à la position de chargement de récipient (LP) et/ou déposé à une position de déchargement.

16. Procédé pour l'impression de récipients (2) au moyen d'une tête d'impression (3), dans lequel un récipient (2) se trouvant à une position de chargement de récipient (LP) est déplacé de la position de chargement de récipient (LP) à une position d'impression (DP) au moyen d'un bras de transport (4.1) d'un dispositif de transport de récipient (4) et est imprimé à cette position d'impression, **caractérisé en ce que** le récipient (2) est maintenu et centré au moyen d'une unité de maintien et de centrage (5) du bras de transport (4.1) et est déplacé au moyen d'un mouvement de levage-pivotement de la position de chargement de récipient (LP) à la position d'impression (DP) et ce de sorte que le bras de transport (4.1) du dispositif de transport de récipient (4) soit pivoté autour d'un axe de pivotement et soit déplacé au moyen d'un élément de levage (4.2) axialement déplaçable axialement par rapport à cet axe de pivotement.
